# EUROPEAN PATENT APPLICATION

(11) **EP 4 535 734 A1**
(43) Date of publication of application: **09.04.2025**
(21) Application number: 23811536.4
(22) Date of filing: 24.04.2023
(51) Int. Cl.: H04L 25/03, H02J 7/10, H04L 25/02

(54) **IDENTIFICATION INFORMATION RECEIVING DEVICE, POWER STORAGE PACK, IDENTIFICATION INFORMATION RECEIVING METHOD, IDENTIFICATION INFORMATION RECEIVING PROGRAM, AND RECORDING MEDIUM IN WHICH PROGRAM IS WRITTEN**

(30) Priority: 27.05.2022 JP 2022086861
(71) Applicant: Panasonic Intellectual Property Management Co., Ltd., Kadoma-shi, Osaka 571-0057 (JP)
(72) Inventor: KURANUKI Masaaki, Kadoma-shi, Osaka 571-0057 (JP); HAMAMOTO Katsuaki, Kadoma-shi, Osaka 571-0057 (JP)
(74) Representative: Novagraaf International SA
(86) International application number: PCT/JP2023/016053
(87) International publication number: WO 2023/228658

(57) **Abstract**

In an identification information receiving device that receives identification information defined by a plurality of bits and superimposed on a current or a voltage of a power line by an identification information transmitting device that is connected to the identification information receiving device via the power line, an edge detector detects an edge of an input signal that indicates a voltage value corresponding to the current or the voltage of the power line. A T flip-flop circuit inverts an output, each time the edge of the input signal is detected.

## Description

### TECHNICAL FIELD

The present disclosure relates to an identification information receiving device, a power storage pack, an identification information receiving method, and an identification information receiving program for receiving identification information superimposed on current or voltage of a power line.

### BACKGROUND ART

In recent years, electrically assisted bicycles have become increasingly popular. Removable and portable battery packs are used in electrically assisted bicycles. In order to eliminate terminals for communication lines from battery pack connectors, a system has been developed to transmit control signals wirelessly by including a wireless communication function in the battery packs and the electrically assisted bicycles.

When a plurality of electrically assisted bicycles are present within the range where wireless communication can be established with the battery pack of a vehicle, the battery pack may be erroneously controlled by another vehicle that is adjacent to the vehicle, and the safety and security of the entire system cannot be guaranteed. In particular, in rental services and sharing services, a plurality of electrically assisted bicycles are often parked in a single bicycle parking lot. In order to operate the entire system safely and securely, each electrically assisted bicycle needs to correctly identify the mounted battery pack.

Identification information could be superimposed on a power line with binary current (other than zero) or binary voltage (other than zero) while supplying power from the battery pack to the vehicle via the power line. The receiver compares the measured value of current or voltage with a threshold value, sets the measured value greater than or equal to the threshold value to 1 and sets the measured value less than the threshold value to 0, and receives the identification information.

However, variations in component characteristics and changes in current consumption may add offsets to the measured values of current or voltage, which may prevent the identification information from being received correctly. Factors that cause variations in the current or the voltage superimposed on the power line include both long-term and short-term factors. The long-term factors include individual differences in electronic components and aging. The long-term factors almost entirely depend on variations in the DC component. The short-term factors include unexpected variations in load current, such as intermittent operation of a microcontroller. The short-term factors are caused by variations in the AC component, and correspond to current or voltage variations in a single packet.

Patent Literature (PTL) 1 discloses a method of receiving a two-line differential voltage logic signal transmitted through a communication path by shaping the waveform of the signal with use of a Schmitt trigger circuit that includes a differentiating circuit and a hysteresis comparator. The Schmitt trigger circuit includes first threshold value Vr1 and second threshold value Vr2 that is lower in potential than first threshold value Vr1. The Schmitt trigger circuit outputs a high-level signal when input signal Sd exceeds first threshold value Vr1, and outputs a low-level signal when signal Sd falls below second threshold value Vr2. When the potential of signal Sd is between first threshold value Vr1 and second threshold value Vr2, the immediately preceding level is maintained (see FIG. 3 in PTL 1).

### Citation List

### Patent Literature

[PTL 1] Japanese Unexamined Patent Application Publication No. 2019-146141

### SUMMARY OF THE INVENTION

When the Schmitt trigger circuit determines whether signal Sd is at a high level or low level, and when noise above first threshold value Vr1 or below second threshold value Vr2 is superimposed on signal Sd, cases occur where the output signal of the Schmitt trigger circuit is inverted at unintended timing. This leads to an incorrect detection.

The present disclosure has been conceived in view of these circumstances. An object of the present disclosure is to provide a technique for reducing incorrect determinations in detecting identification information superimposed on current or voltage of the power line.

In order to solve the problem, an identification information receiving device according to an aspect of the present disclosure is an identification information receiving device that receives identification information defined by a plurality of bits. The identification information is superimposed on a current or a voltage of a power line by an identification information transmitting device that is connected to the identification information receiving device via the power line. The identification information receiving device includes: an edge detector that detects an edge of an input signal that indicates a voltage value corresponding to the current or the voltage of the power line; and a T flip-flop circuit that inverts an output, each time the edge of the input signal is detected.

Note that an arbitrary combination of the structural elements described above and those obtained by converting the expressions described in the present disclosure into devices, systems, methods, computer programs, recording media, and the like are also effective as embodiments of the present disclosure.

According to the present disclosure, it is possible to reduce incorrect determinations in detecting identification information superimposed on the current or the voltage of the power line.

### BRIEF DESCRIPTION OF THE DRAWINGS

[FIG. 1] FIG. 1 illustrates an electrically assisted bicycle on which a battery pack according to an embodiment is mounted.
[FIG. 2] FIG. 2 is a diagram for describing an outline of Authentication Processing Example 1 of the battery pack mounted on a vehicle.
[FIG. 3] FIG. 3 illustrates Configuration Example 1 of the battery pack and the vehicle according to the embodiment.
[FIG. 4] FIG. 4 is a diagram for describing an outline of Authentication Processing Example 2 of the battery pack mounted on the vehicle.
[FIG. 5] FIG. 5 illustrates Configuration Example 2 of the battery pack and the vehicle according to the embodiment.
[FIG. 6A] FIG. 6A illustrates an example of transmission current and reception current superimposed on a power line.
[FIG. 6B] FIG. 6B illustrates an example of transmission current and reception current superimposed on a power line.
[FIG. 7] FIG. 7 illustrates Configuration Example 1 of a first ID detection circuit.
[FIG. 8] FIG. 8 illustrates a truth table for a T flip-flop circuit illustrated in FIG. 7.
[FIG. 9A] FIG. 9A illustrates a simulation waveform of a result of Simulation 1.
[FIG. 9B] FIG. 9B illustrates a simulation waveform of a result of Simulation 1.
[FIG. 9C] FIG. 9C illustrates a simulation waveform of a result of Simulation 1.
[FIG. 9D] FIG. 9D illustrates a simulation waveform of a result of Simulation 1.
[FIG. 10] FIG. 10 illustrates a developmental example of Configuration Example 1 of the first ID detection circuit illustrated in FIG. 7.
[FIG. 11] FIG. 11 illustrates a truth table for a T flip-flop circuit illustrated in FIG. 10.
[FIG. 12] FIG. 12 illustrates a simulation waveform of an output signal of an edge detector with noise pulses mixed in.
[FIG. 13] FIG. 13 illustrates simulation waveforms including masking pulses.
[FIG. 14] FIG. 14 illustrates Configuration Example 2 of the first ID detection circuit.
[FIG. 15A] FIG. 15A illustrates a simulation waveform of a result of Simulation 2.
[FIG. 15B] FIG. 15B illustrates a simulation waveform of a result of Simulation 2.
[FIG. 15C] FIG. 15C illustrates a simulation waveform of a result of Simulation 2.
[FIG. 15D] FIG. 15D illustrates a simulation waveform of a result of Simulation 2.
[FIG. 15E] FIG. 15E illustrates a simulation waveform of a result of Simulation 2.
[FIG. 16] FIG. 16 illustrates a developmental example of Configuration Example 2 of the first ID detection circuit illustrated in FIG. 14.

### DESCRIPTION OF EMBODIMENT

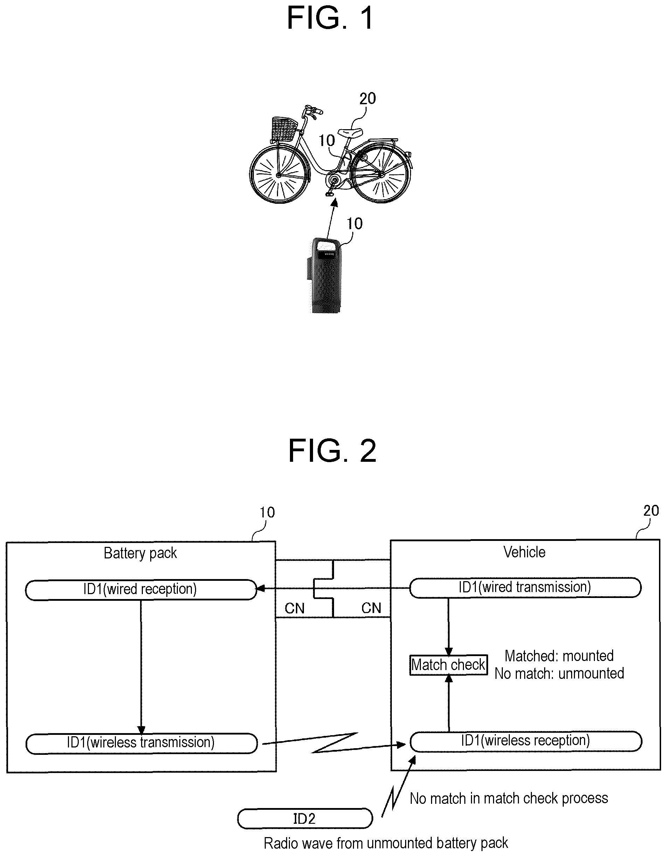

FIG. 1 illustrates an electrically assisted bicycle on which a battery pack according to an embodiment is mounted. Battery pack 10 is removable, portable, and replaceable, and can be mounted on the mounting slot of vehicle 20 or a charger (not illustrated). Hereinafter, in the present embodiment, an electrically assisted bicycle is assumed as vehicle 20.

Since replaceable battery pack 10 is frequently connected to and disconnected from the mounting slot of vehicle 20 or the charger, the connector portion of battery pack 10 is prone to progressive deterioration. In view of the above, in the present embodiment, battery pack 10 includes a wireless communication function to transmit control signals via wireless communication. This allows the terminal for the communication line to be eliminated from the connector of battery pack 10, leaving only the terminal for the power line.

Near field wireless communication is used for wireless communication between vehicle 20 and battery pack 10. Bluetooth (registered trademark), Wi-Fi (registered trademark), infrared communication, and the like can be used for the near field wireless communication. Hereinafter, it is assumed that Bluetooth Low Energy (BLE) is used as the near field wireless communication in the present embodiment.

The BLE is one of the extended standards of Bluetooth, and a low power consumption near field wireless communication standard using the 2.4 GHz band. The BLE is suitable for battery operation because the BLE consumes low power to such an extent that the battery pack can be driven for several years with a single button cell, thus, minimizing the impact on the remaining capacity of battery pack 10. In addition, many BLE communication modules have been shipped to the market, and therefore are available at low cost.

A radio wave coverage of the BLE is approximately 10 meters when a typical Class 2 device is used. Therefore, a state in which a plurality of vehicles 20 and a plurality of battery packs 10 are present within one communication range of BLE may occur. In such a case, radio wave interference may occur between vehicle systems, resulting in an unstable operation. Furthermore, vehicle 20 may be misconnect to another battery pack 10 that is other than battery pack 10 mounted on the vehicle. In such a case, the mounted battery pack 10 may be controlled incorrectly.

Therefore, a mechanism is required to ensure that battery pack 10 mounted on vehicle 20 and battery pack 10 of a communication partner of vehicle 20 are identical. In the present embodiment, identification information (ID) is used to check that battery pack 10 physically connected to vehicle 20 by wire and battery pack 10 connected by wireless communication are identical to each other. The identification information (ID) may be unique to each vehicle 20 or each battery pack 10, or may be temporal identification information. For example, a Bluetooth Device (BD) address or Medium Access Control (MAC) address may be used as unique identification information.

FIG. 2 is a diagram for describing an outline of Authentication Processing Example 1 of battery pack 10 mounted on vehicle 20. When the connector of battery pack 10 is connected to the connector of the mounting slot of vehicle 20, vehicle 20 transmits ID1 to battery pack 10 via wired communication. When battery pack 10 receives ID1 via wired communication, battery pack 10 transmits an advertisement packet (beacon packet) that includes received ID1 and battery pack ID of battery pack 10 via near field wireless communication. The advertisement packet is a signal for notifying nearby devices of the presence of battery pack 10 via near field wireless communication.

When receiving the advertisement packet, vehicle 20 checks ID1 included in the advertisement packet against ID1 transmitted to battery pack 10 via wired communication. When there is a match between these, vehicle 20 authenticates that the mounted battery pack 10 and the communication partner of vehicle 20 via near field wireless communication are identical. When there is no match between these, vehicle 20 determines that the mounted battery pack 10 and the communication partner of vehicle 20 via near field wireless communication are not identical, and does not authenticate battery pack 10 of the communication partner. For example, when vehicle 20 receives an advertisement packet that includes ID2, ID2 does not match ID1 transmitted to battery pack 10 via wired communication. Therefore, vehicle 20 does not authenticate battery pack 10 from which the advertisement packet that includes ID2 has been transmitted.

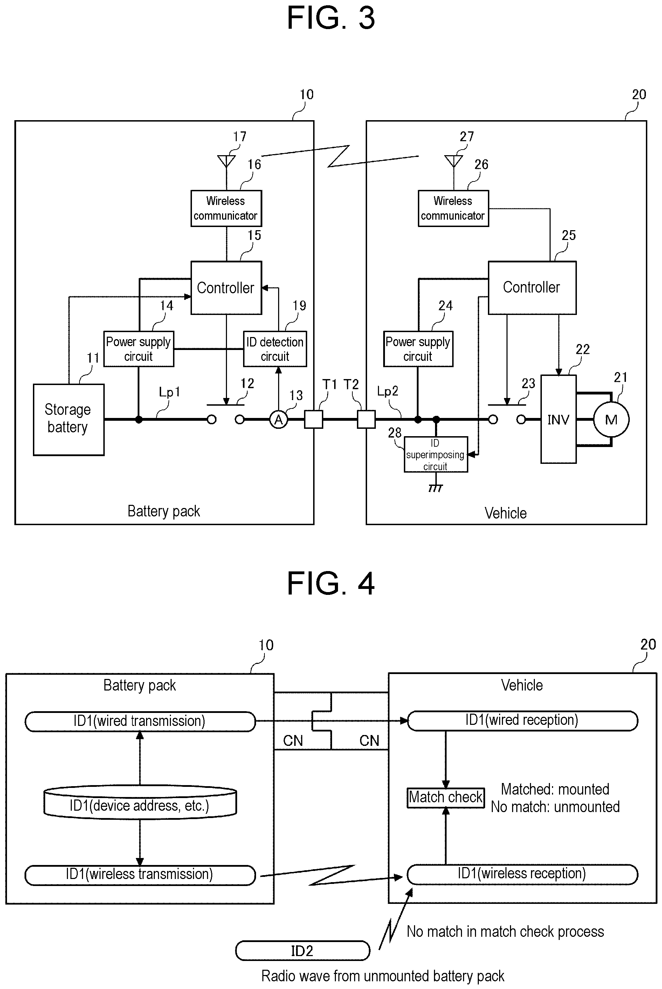

FIG. 3 illustrates Configuration Example 1 of battery pack 10 and vehicle 20 according to the embodiment. Configuration Example 1 illustrated in FIG. 3 corresponds to Authentication Processing Example 1. FIG. 3 illustrates the structural elements necessary for Authentication Processing Example 1, and the structural elements not related to Authentication Processing Example 1 are omitted as appropriate. FIG. 3 presumes a state in which battery pack 10 is mounted on vehicle 20.

Battery pack 10 includes storage battery 11, first relay 12, first current sensor 13, first power supply circuit 14, first controller 15, first wireless communicator 16, first antenna 17, first ID detection circuit 19, and power supply terminal T1. Vehicle 20 includes motor 21, inverter 22, second relay 23, second power supply circuit 24, second controller 25, second wireless communicator 26, second antenna 27, second ID superimposing circuit 28, and power receiving terminal T2. In a state where battery pack 10 is mounted on vehicle 20, power supply terminal T1 and power receiving terminal T2 are in physical contact with each other, and power line Lp1 in battery pack 10 and power line Lp2 in vehicle 20 are conducted to each other.

Storage battery 11 includes a plurality of cells connected in series or in series-parallel. Examples of the cells include lithium-ion battery cells, nickel-metal hydride battery cells, and lead-acid battery cells. Hereinafter, in the description, an example is assumed in which lithium-ion battery cells (nominal voltage: 3.6 V to 3.7 V) are used. The number of cells connected in series is determined according to the drive voltage of motor 21 of vehicle 20.

First relay 12 is disposed in power line Lp1 that connects storage battery 11 and power supply terminal T1. Instead of the relay, another type of switch, such as a semiconductor switch, may be used.

First current sensor 13 measures the current flowing in power line Lp1 in battery pack 10, and outputs the measured current to first ID detection circuit 19. First current sensor 13 includes, for example, a combination of a shunt resistor and an amplifier. The voltage across the shunt resistor disposed in power line Lp1 is amplified by the amplifier, so that first current sensor 13 outputs a voltage value corresponding to the current flowing in power line Lp1. A hall element or a CT sensor can be used instead of the shunt resistor.

First power supply circuit 14 is a DC/DC converter that steps down the voltage of storage battery 11 to generate supply voltage of first controller 15 (e.g., approximately 3.3 V to 5 V) and supply voltage of first ID detection circuit 19 (+15 V and -15 V in the specific example below). First power supply circuit 14 may include a switching regulator or a linear regulator.

First controller 15 is a microcontroller that controls the entire battery pack 10. First controller 15 monitors the state of storage battery 11 (specifically, the voltage, current, and temperature of each cell in storage battery 11). Based on the monitored data, first controller 15 estimates the state of charge (SOC), full charge capacity (FCC), and state of health (SOH) of each cell in storage battery 11. First controller 15 turns off first relay 12 to protect the cells in storage battery 11 when an overvoltage, undervoltage, overcurrent, high temperature anomaly or low temperature anomaly occurs in the cells.

First wireless communicator 16 executes near field wireless communication processing. In the present embodiment, first wireless communicator 16 includes a BLE module, and first antenna 17 includes a chip antenna or pattern antenna built into the BLE module. First wireless communicator 16 outputs data received via near field wireless communication to first controller 15, and transmits data input from first controller 15 via near field wireless communication.

In the present embodiment, vehicle 20 includes a three-phase AC motor as motor 21 for driving. Inverter 22 converts DC power supplied from battery pack 10 to AC power, and supplies the AC power to motor 21 during power operation. During regeneration operation, inverter 22 converts the AC power supplied from motor 21 to DC power, and supplies the DC power to battery pack 10. Motor 21 rotates according to the AC power supplied from inverter 22 during power operation. During regeneration operation, motor 21 converts the rotational energy from deceleration to AC power, and supplies the AC power to inverter 22.

Second relay 23 is disposed in power line Lp2 that connects inverter 22 and power receiving terminal T2. Instead of the relay, another type of switch, such as a semiconductor switch, may be used.

Second power supply circuit 24 is a DC/DC converter that steps down the voltage supplied from storage battery 11 in battery pack 10 mounted on vehicle 20 to generate supply voltage (e.g., approximately 3.3 V to 5 V) of second controller 25. Second power supply circuit 24 may include a switching regulator or a linear regulator. In the present embodiment, vehicle 20 does not include batteries (e.g., lead-acid batteries) for generating control power supply. Therefore, it is necessary to generate the control power supply from the driving power supply supplied from storage battery 11 in the mounted battery pack 10.

Second controller 25 is a microcontroller that controls the entire vehicle 20. Second wireless communicator 26 executes near field wireless communication processing. In the present embodiment, second wireless communicator 26 includes a BLE module, and second antenna 27 includes a chip antenna or pattern antenna built into the BLE module. Second wireless communicator 26 outputs the data received via near field wireless communication to second controller 25, and transmits the data input from second controller 25 via near field wireless communication.

First controller 15 or second controller 25, for example, includes a microcomputer that mainly includes a central processing unit (CPU) and memory. In other words, first controller 15 or second controller 25 is realized by a computer that includes a CPU and memory, and the computer functions as first controller 15 or second controller 25 when the CPU executes the program stored in the memory. The program is recorded in the memory of first controller 15 or second controller 25 in advance here, but may also be provided through telecommunication lines such as the Internet or on a (non-transitory) recording medium such as a memory card.

Second ID superimposing circuit 28 superimposes ID on the current flowing in power line Lp2. The ID is defined by a plurality of bits, each bit being represented by a binary current. When second controller 25 receives its power supply from storage battery 11 of battery pack 10, rather than from its own battery included in vehicle 20, it is not possible to assign the energization and de-energization of the current flowing from storage battery 11 to vehicle 20 to a binary current representing each bit of the ID. Therefore, the binary current representing each bit needs to be set to two different current values other than zero.

Second ID superimposing circuit 28 includes two loads with different resistance values, and one or more switches for selecting one of the two loads or for setting the two loads to non-conducting states. Second ID superimposing circuit 28 may also include a variable load that can be switched between two different resistance values, and one or more switches for switching the resistance value of the variable load or setting the variable load to a non-conducting state.

When second relay 23 is in an off state, the current flowing in power line Lp2 depends almost on the current consumed by second controller 25. When second relay 23 is off, second controller 25 sets ID to second ID superimposing circuit 28. Second ID superimposing circuit 28 superimposes the bit "1" of the ID on the current by setting the load with a smaller resistance value of two loads to a conducting state, and superimposes the bit "0" of the ID on the current by setting the load with a larger resistance value to a conducting state. This causes the value of the current drawn to vehicle 20 side to vary according to each bit of the ID.

First current sensor 13 of battery pack 10 measures the current flowing in power line Lp1, and outputs the measured current to first ID detection circuit 19. First ID detection circuit 19 detects the ID superimposed on the current flowing in power line Lp1 based on the voltage value corresponding to the current measured by first current sensor 13, and outputs the detected ID to first controller 15. An example of a specific configuration of first ID detection circuit 19 will be described later.

FIG. 4 is a diagram for describing an outline of Authentication Processing Example 2 of battery pack 10 mounted on vehicle 20. When the connector of battery pack 10 is connected to the connector of the mounting slot of vehicle 20, battery pack 10 transmits ID1 to vehicle 20 via wired communication. At the same time, battery pack 10 transmits an advertisement packet that includes ID1 via near field wireless communication.

When vehicle 20 receives the advertisement packet, vehicle 20 checks ID1 included in the advertisement packet against ID1 received via wired communication. When there is a match between these, vehicle 20 authenticates that the mounted battery pack 10 and the communication partner of vehicle 20 via the near field wireless communication are identical. When there is no match between these, vehicle 20 determines that the mounted battery pack 10 and the communication partner of vehicle 20 via the near field wireless communication are not identical, and does not authenticate battery pack 10 of the communication partner. For example, when vehicle 20 receives an advertisement packet that includes ID2, ID2 does not match ID1 received via wired communication. Therefore, vehicle 20 does not authenticate battery pack 10 from which the advertisement packet that includes ID2 has been transmitted.

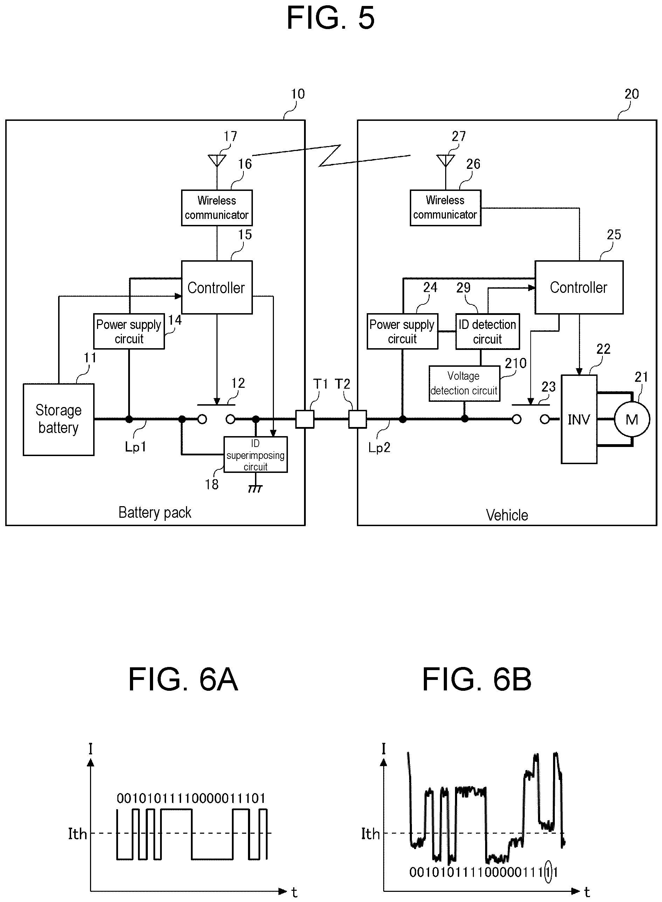

FIG. 5 illustrates Configuration Example 2 of battery pack 10 and vehicle 20 according to the embodiment. Configuration Example 2 illustrated in FIG. 5 corresponds to Authentication Processing Example 2. FIG. 5 illustrates the structural elements necessary for Authentication Processing Example 2, and the structural elements not related to Authentication Processing Example 2 are omitted as appropriate. In Configuration Example 1, ID is superimposed on the current flowing in the power line. In Configuration Example 2, ID is superimposed on the voltage of the power line.

In Configuration Example 2 illustrated in FIG. 5, compared to Configuration Example 1 illustrated in FIG. 3, first ID superimposing circuit 18 is included in battery pack 10, and second ID detection circuit 29 and voltage detection circuit 210 are included in vehicle 20. First ID superimposing circuit 18 includes, for example, an addition circuit that includes an operational amplifier. The operational amplifier uses the voltage of storage battery 11 as supply voltage, adds the ID voltage supplied from first controller 15 to the base voltage that is lower than the supply voltage, and outputs the voltage after addition to power line Lp1. This causes the value of the voltage supplied to vehicle 20 to vary according to each bit of the ID.

Voltage detection circuit 210 in vehicle 20 measures the voltage of power line Lp2, and outputs the measured voltage to second ID detection circuit 29. Voltage detection circuit 210 includes, for example, a resistor voltage divider circuit, and the divided voltage is input to second ID detection circuit 29. Second ID detection circuit 29 detects the ID superimposed on the voltage flowing in power line Lp2 based on the voltage value measured by voltage detection circuit 210, and outputs the detected ID to second controller 25.

In Configuration Example 1 illustrated in FIG. 3, ID is transmitted from vehicle 20 to battery pack 10, so that vehicle 20 serves as an identification information transmitting device and battery pack 10 serves as an identification information receiving device. In contrast, in Configuration Example 2 illustrated in FIG. 5, ID is transmitted from battery pack 10 to vehicle 20, so that battery pack 10 serves as an identification information transmitting device and vehicle 20 serves as an identification information receiving device. A description of an identification information receiving device will be given below based on Configuration Example 1 that employs the current superimposing method.

FIG. 6A illustrates an example of transmission current and reception current superimposed on the power line. FIG. 6A illustrates an example of transmission current superimposed by the identification information transmitting device, and FIG. 6B illustrates an example of reception current detected by the identification information receiving device. The identification information receiving device determines bit "1" when current value I is greater than or equal to threshold value Ith, and determines bit "0" when current value I is less than threshold value Ith. As an example, threshold value Ith may be set to 50mA, an assumed value of the low-level side of current value I may be set to 30 mA, and an assumed value of the high-level side of current value I may be set to 70 mA.

In this case, an offset may be added to current value I due to variations in component characteristics and changes in current consumption. Variations in component characteristics are caused by at least one of individual differences, temperature changes, and aging. Unexpected changes in current consumption of the identification information transmitting device (vehicle 20) occur, for example, when some kind of background processing or event processing (e.g., software update processing) is initiated in second controller 25 (microcontroller) during the authentication processing using second controller 25. Changes in current consumption of the identification information transmitting device (vehicle 20) can also be caused by changes in the configuration of the identification information transmitting device (vehicle 20), such as the illumination of light.

When the current consumption of the identification information transmitting device increases due to such changes in system conditions or system configuration, the current flowing in the power line increases. That is, an offset is added to the current flowing in the power line. The offset can cause errors in bit determination of the ID superimposed on the current flowing in the power line. In the examples illustrated in FIG. 6A and FIG. 6B, the ID superimposed on the current by the identification information transmitting device is "00101011110000011101", while the ID detected from the current by the identification information receiving device is "00101011110000011111". In such a manner, a bit error has occurred in the second least significant bit of the detected ID. The following describes a method of cancelling the effects of variations in the DC component by detecting edges of the current measurement values and restoring the original waveform with use of a flip-flop circuit.

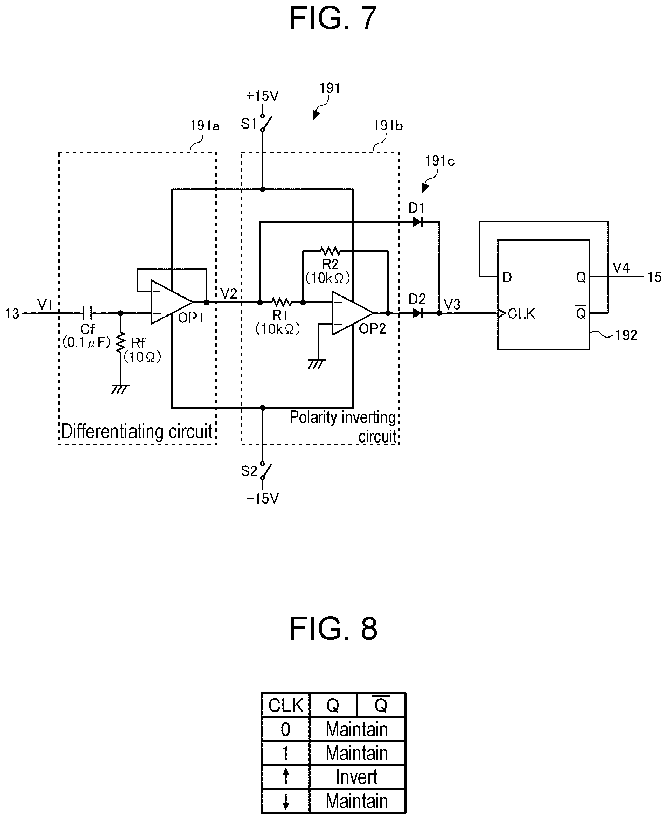

FIG. 7 illustrates Configuration Example 1 of first ID detection circuit 19. First ID detection circuit 19 includes edge detector 191 and T (Toggle) flip-flop circuit 192. Edge detector 191 detects an edge of an input signal (V1) that indicates a voltage value corresponding to the current or the voltage of the power line. An output signal (V3) of edge detector 191 is input to clock terminal CLK of T flip-flop circuit 192. T flip-flop circuit 192 inverts an output, each time an edge of the input signal (V1) is detected. In the example illustrated in FIG. 7, the T flip-flop circuit is implemented using a D flip-flop logic circuit, but the T flip-flop circuit can also be implemented using other configurations.

In Configuration Example 1, edge detector 191 includes differentiating circuit 191a, polarity inverting circuit 191b, and diode OR circuit 191c. Differentiating circuit 191a differentiates the input signal (V1). Polarity inverting circuit 191b inverts the polarity of an output signal (V2) of differentiating circuit 191a. Diode OR circuit 191c conducts the positive components of the output signal (V2) of differentiating circuit 191a and the output signal of polarity inverting circuit 192c (the negative components are blocked), and outputs the positive components to clock terminal CLK of T flip-flop circuit 192.

In the example illustrated in FIG. 7, differentiating circuit 191a includes a CR circuit and a voltage follower. In the CR circuit, filter capacitor Cf and filter resistor Rf are connected in series between the input terminal and the ground terminal, and the connection point between filter capacitor Cf and filter resistor Rf serves as an output terminal. The CR circuit outputs a signal whose components lower than or equal to the cutoff frequency have been attenuated.

The voltage follower includes first operational amplifier OP1. The output terminal of the CR circuit is connected to the non-inverting input terminal of first operational amplifier OP1, and the output terminal of first operational amplifier OP1 is connected to the inverting input terminal of first operational amplifier OP1. The voltage follower is a buffer that can be considered to have an amplification factor = 1, input impedance = ∞, and output impedance = 0. By disposing the voltage follower between the CR circuit and polarity inverting circuit 191b, it is possible to reduce variations in the time constant of the CR circuit due to the effects of first resistor R1 and second resistor R2 included in polarity inverting circuit 191b.

Although FIG. 7 illustrates an example in which differentiating circuit 191a includes a combination of a passive filter (CR high-pass filter) and a voltage follower, differentiating circuit 191a may include an active filter (differentiating circuit that includes an operational amplifier). In the differentiating circuit that includes the operational amplifier, a capacitor is connected to the input terminal of the operational amplifier.

Polarity inverting circuit 191b includes second operational amplifier OP2, first resistor R1, and second resistor R2. First resistor R1 is connected between the inverting input terminal of second operational amplifier OP2 and the output terminal of first operational amplifier OP1 included in differentiating circuit 191a. Second resistor R2 is connected to the feedback path between the output terminal and the inverting input terminal of second operational amplifier OP2. The non-inverting input terminal of second operational amplifier OP2 is connected to the ground.

The resistance values of first resistor R1 and second resistor R2 are set to the same value (10 kΩ in the example illustrated in FIG. 7). When the resistance values of first resistor R1 and second resistor R2 are the same, second operational amplifier OP2 is an inverting amplifier of gain = 1, and inverts only the polarity of the output signal (V2) of differentiating circuit 191a. The height of the amplitude of the output signal (V2) of differentiating circuit 191a and the height of the amplitude of the output signal of polarity inverting circuit 191b does not always have to be the same. Therefore, the gain of the inverting amplifier may be set to a value other than 1.

Diode OR circuit 191c includes first diode D1 and second diode D2.

First diode D1 includes an anode terminal that is connected to the output terminal of differentiating circuit 191a, and a cathode terminal connected to clock terminal CLK of T flip-flop circuit 192. First diode D1 includes an anode terminal that is connected to the output terminal of polarity inverting circuit 191b, and a cathode terminal that is connected to clock terminal CLK of T flip-flop circuit 192. Polarity inverting circuit 191b and diode OR circuit 191c unify the polarities of the rising edges and falling edges of the input signal (V1) detected by differentiating circuit 191a. Specifically, falling edges are converted to rising edges, so that all edges become rising edges.

T flip-flop circuit 192 is a flip-flop circuit that inverts an output with the rising edge input to clock terminal CLK as a trigger. FIG. 7 illustrates an example in which T flip-flop circuit 192 is formed of an edge-triggered D flip-flop circuit. In the edge-triggered D flip-flop circuit, inverting output terminal /Q is connected to input terminal D. T flip-flop circuit 192 can also be implemented by fixing the inputs to both first input terminal J and second input terminal K of JK flip-flop circuit at 1.

FIG. 8 illustrates a truth table for T flip-flop circuit 192 illustrated in FIG. 7. The values of output terminal Q and inverting output terminal /Q are inverted at the timing of the rising edge of the signal input to clock terminal CLK. During the period other than the above, the values of output terminal Q and inverted output terminal /Q are maintained.

A T flip-flop circuit may be used which makes the rising edges and falling edges of the input signal (V1) detected by differentiating circuit 191a to falling edges, and inverts an output with the falling edge input to clock terminal CLK as a trigger.

In the example illustrated in FIG. 7, a dual power supply operational amplifier is used for each of first operational amplifier OP1 and second operational amplifier OP2. Specifically, a dual power supply operational amplifier of +15 V and -15 V is used. First switch S1 is connected between the +15 V power supply and the positive power supply terminals of first operational amplifier OP1 and second operational amplifier OP2. Second switch S2 is connected between the -15 V power supply and the negative power supply terminals of first operational amplifier OP1 and second operational amplifier OP2. The +15 V and -15 V power supplies are supplied by first power supply circuit 14.

When an authentication period (e.g., ten seconds after battery pack 10 is mounted) that includes the reception of the ID at the time of mounting of battery pack 10 ends, first controller 15 blocks the power supply to the active elements (first operational amplifier OP1 and second operational amplifier OP2 in the example illustrated in FIG. 7) included in edge detector 191, by turning off first switch S1 and second switch S2. This reduces power consumption during periods when first ID detection circuit 19 is not used, saving the capacity of storage battery 11.

First controller 15 may also block the power supply to T flip-flop circuit 192 when the authentication period that includes the reception of the ID at the time of mounting of battery pack 10 ends. For example, when T flip-flop circuit 192 operates on a 1 V to 5 V power supply, first controller 15 blocks the power supply to T flip-flop circuit 192 by turning off a switch (not illustrated) between the 1 V to 5 V power supply and the power supply terminal of T flip-flop circuit 192.

The results of the simulations of first ID detection circuit 19 illustrated in FIG. 7 will be descried below. In Simulation 1, filter capacitor Cf of 0.1 µF and filter resistor Rf of 10 Ω are used. In this case, the time constant of the CR circuit is set to τ = 0.1 µs and the cutoff frequency of the CR circuit is set to fc ≒ 159.2 kHz.

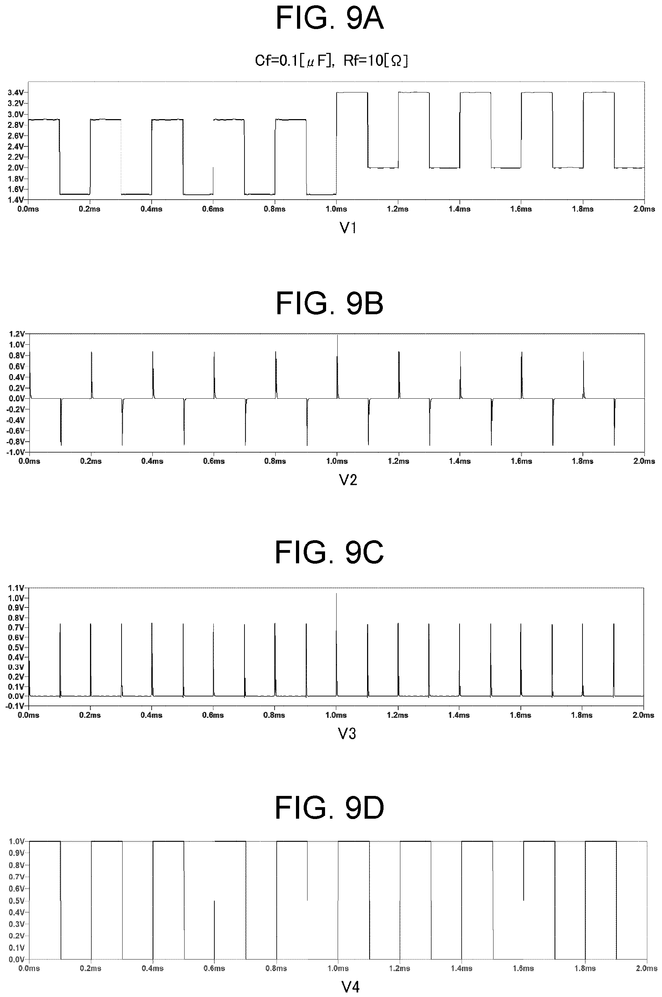

FIG. 9A to FIG. 9D illustrate the simulation waveforms of the results of Simulation 1. FIG. 9A illustrates the waveform of the input signal (V1) to first ID detection circuit 19, FIG. 9B illustrates the waveform of the output signal (V2) of differentiating circuit 191a, FIG. 9C illustrates the waveform of the output signal (V3) of edge detector 191, and FIG. 9D illustrates the waveform of the output signal (V4) of T flip-flop circuit 192.

In the present embodiment, 9600 bps is assumed as the ID communication speed. In Simulation 1, the input signal (V1) is a square wave with a clock frequency of 5 kHz (period of 0.2 ms) that is at or close to the clock frequency at which 9600 bits are transferred per second.

Simulation 1 shows an example in which an offset is added to the current flowing in the power line from 1.0 ms, and the input signal (V1) increases by the amount of the offset The amplitudes of the output signal (V2) of differentiating circuit 191a and the output signal (V3) of edge detector 191 at 1.0 ms are large. However, it does not affect the waveform of the output signal (V4) of T flip-flop circuit 192. In such a manner, by inputting a polarity-unified differential waveform to T flip-flop circuit 192, it is possible to restore a similar waveform of the input signal (V1) in which offset effects (i.e., the effects of current variations during communication) have been canceled.

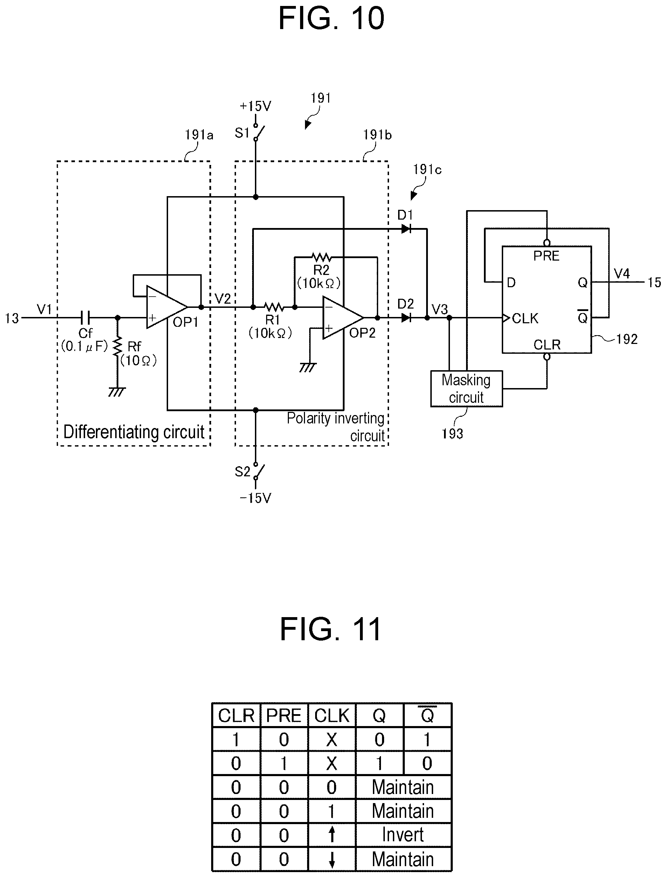

FIG. 10 illustrates a developmental example of Configuration Example 1 of first ID detection circuit 19 illustrated in FIG. 7. First ID detection circuit 19 illustrated in FIG. 10 includes masking circuit 193 in addition to the configuration of first ID detection circuit 19 illustrated in FIG. 7. T flip-flop circuit 192 illustrated in FIG. 10 includes preset terminal PRE and clear terminal CLR.

FIG. 11 illustrates a truth table for T flip-flop circuit 192 illustrated in FIG. 10.

During the period when "1" (high level) is input to preset terminal PRE and "0" (low level) is input to clear terminal CLR, the value of output terminal Q is fixed at "0" and the value of inverting output terminal /Q is fixed at "1", regardless of the input value to clock terminal CLK. In contrast, during the period when "0" is input to preset terminal PRE and "1" is input to clear terminal CLR, the value of output terminal Q is fixed at "1" and the value of inverting output terminal /Q is fixed at "0", regardless of the input value to clock terminal CLK.

During the period when "0" is input to both preset terminal PRE and clear terminal CLR, the logic is the same as the truth table of T flip-flop circuit 192 illustrated in FIG. 7. Input of "1" to both preset terminal PRE and clear terminal CLR is prohibited.

When the output signal of T flip-flop circuit 192 is at a low level after a given edge detection period, masking circuit 193 inputs a high-level signal to clear terminal CLR and a low-level signal to preset terminal PRE until the next edge detection period. When the output signal of T flip-flop circuit 192 is at a high level after a given edge detection period, masking circuit 193 inputs a high-level signal to preset terminal PRE and a low-level signal to clear terminal CLR until the next edge detection period.

The edge detection period is set to the period that includes the point at which the high and low levels of the input signal (V1) may change (i.e., the point at which an edge may be detected). In a unit cycle, for example, the ratio of the edge detection period and the non-edge detection period is set to 1:9 or 2:8. Since the communication rate (bps) is assumed to be fixed in the present embodiment, the edge detection period can be set periodically according to the communication rate of the ID bit string.

Masking circuit 193 masks the output signal (V3) of edge detector 191 in the non-edge detection period to prevent the output of T flip-flop circuit 192 from being inverted during the non-edge detection period.

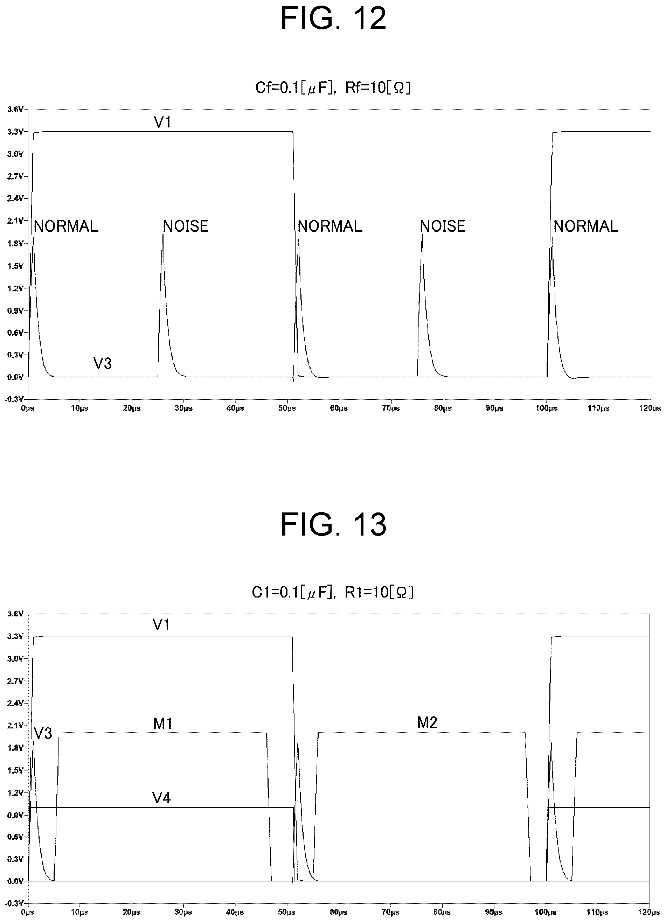

FIG. 12 illustrates the simulation waveform of the output signal (V3) of edge detector 191 with noise pulses mixed in. When noise pulses are mixed in during the non-edge detection period of the input signal (V1), the output signal of T flip-flop circuit 192 is inverted by the noise pulses, so that the input signal (V1) cannot be restored correctly.

FIG. 13 illustrates the simulation waveforms including masking pulses M1 and M2.

First masking pulse M1 is a pulse for masking changes in the output signal (V3) of edge detector 191 due to noise pulses during the non-edge detection period of the high-level input signal (V1). Second masking pulse M2 is a pulse for masking changes in the output signal (V3) of edge detector 191 due to noise pulses during the non-edge detection period of the low-level input signal (V1). By inputting masking pulses M1 and M2 to T flip-flop circuit 192, the output signal (V4) of T flip-flop circuit 192 with the noise pulses disabled can be generated.

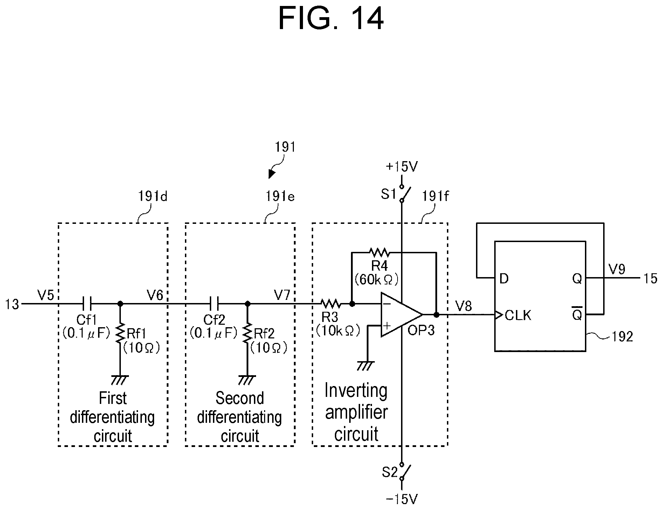

FIG. 14 illustrates Configuration Example 2 of first ID detection circuit 19. In Configuration Example 2, edge detector 191 includes first differentiating circuit 191d, second differentiating circuit 191e, and inverting amplifier circuit 191f. First differentiating circuit 191d differentiates an input signal (V5). Second differentiating circuit 191e differentiates an output signal (V6) of first differentiating circuit 191d. Inverting amplifier circuit 191f inverts and amplifies an output signal (V7) of second differentiating circuit 191e.

First differentiating circuit 191d includes a CR circuit that includes first filter capacitor Cf1 and first filter resistor Rf1. A voltage follower may be connected in the subsequent stage of the CR circuit in a similar manner to Configuration Example 1. Second differentiating circuit 191e includes a CR circuit that includes second filter capacitor Cf2 and second filter resistor Rf2. A voltage follower may be connected in the subsequent stage of the CR circuit in a similar manner to Configuration Example 1.

Inverting amplifier circuit 191f includes third operational amplifier OP3, third resistor R3, and fourth resistor R4. Third resistor R3 is connected between the inverting input terminal of third operational amplifier OP3 and the output terminal of second differentiating circuit 191e. Fourth resistor R4 is connected to the feedback path between the output terminal and the inverting input terminal of third operational amplifier OP3. The non-inverting input terminal of third operational amplifier OP3 is connected to the ground.

Inverting amplifier circuit 191f inverts and amplifies an output signal (V7) of second differentiating circuit 191e by the amplification factor defined by (R4/R3). In the example illustrated in FIG. 14, the resistance value of third resistor R3 is set to 10 kΩ and the resistance value of fourth resistor R4 is set to 60 kΩ. Therefore, inverting amplifier circuit 191f increases the output signal (V7) of second differentiating circuit 191e by a multiple of -6, and outputs the resultant signal to clock terminal CLK of T flip-flop circuit 192.

The gain of the signal that has passed through the differentiating circuit that includes a CR circuit is reduced. In the example illustrated in FIG. 14, the capacitance values of first filter capacitor Cf1 and second filter capacitor Cf2 are set to 0.1 µF, and the resistance values of first filter resistor Rf1 and second filter resistor and Rf2 are set to 10Ω. For example, when an input signal (V5) with a clock frequency of 5 kHz passes through first differentiating circuit 191d, the amplitude of the signal is reduced to approximately 5/9 to 1/3. In FIG. 14, since first differentiating circuit 191d and second differentiating circuit 191e are connected in two stages, the amplitude of the input signal (V5) is reduced to approximately (5/9 to 1/3)^{2.}

When the amplitude of the output signal (V7) of second differentiating circuit 191e becomes lower than the threshold voltage of T flip-flop circuit 192, T flip-flop circuit 192 cannot correctly determine whether the output signal (V7) of second differentiating circuit 191e is a high-level signal or a low-level signal. For example, when a 1 V power supply is used for T flip-flop circuit 192, the threshold voltage is set to 0.5 V, and when a 5 V power supply is used, the threshold voltage is set to 2.5V.

In Configuration Example 2 illustrated in FIG. 14, inverting amplifier circuit 191f is disposed to amplify the output signal (V7) of second differentiating circuit 191e such that the amplitude of the output signal (V7) of second differentiating circuit 191e is sufficiently larger than the threshold voltage of T flip-flop circuit 192. The amplification factor of inverting amplifier circuit 191f is set to such a value that the amplitude of the output signal (V7) of second differentiating circuit 191e falls within the input voltage range of T flip-flop circuit 192 and is sufficiently larger than the threshold voltage of T flip-flop circuit 192.

A non-inverting amplifier circuit may be used instead of inverting amplifier circuit 191f. In Configuration Example 2, it is possible to generate an edge detection signal that defines the edge detection point with a waveform that includes positive and negative polarities by second-order differentiation on the input signal (V5). Therefore, the output signal (V9) of T flip-flop circuit 192 has the same waveform regardless of whether the polarity of the output signal (V7) of second differentiating circuit 191e is inverted or not at the stage prior to inputting the output signal (V7) of second differentiating circuit 191e to T flip-flop circuit 192. The operation of T flip-flop circuit 192 is the same as that in Configuration Example 1.

In the example illustrated in FIG. 14, a dual power supply operational amplifier is used for third operational amplifier OP3. Specifically, a dual power supply operational amplifier of +15 V and -15 V is used. First switch S1 is connected between the +15 V power supply and the positive power supply terminal of third operational amplifier OP3. Second switch S2 is connected between the -15 V power supply and the negative power supply terminal of third operational amplifier OP3. The +15 V and -15 V power supplies are supplied by first power supply circuit 14.

When an authentication period that includes the reception of the ID at the time of mounting of battery pack 10 ends, first controller 15 blocks the power supply to active elements (operational amplifier OP3 in the example illustrated in FIG. 14) included in edge detector 191, by turning off first switch S1 and second switch S2. When a voltage follower is connected to each of first differentiating circuit 191d and second differentiating circuit 191e, first controller 15 may also block the power supply to the voltage followers. First controller 15 may also block the power supply to T flip-flop circuit 192.

The results of Simulation 2 of first ID detection circuit 19 illustrated in FIG. 14 will be described below.

In Simulation 2, filter capacitor Cf1 of 0.1 µF, second filter capacitor Cf2 of 0.1 µF, first filter resistor Rf1 of 10 Ω and second filter resistor Rf1 of 10 Ω are used. In this case, the time constant of each CR circuit is set to τ = 0.1 µs and the cutoff frequency of each CR circuit is set to fc ≒ 159.2 kHz.

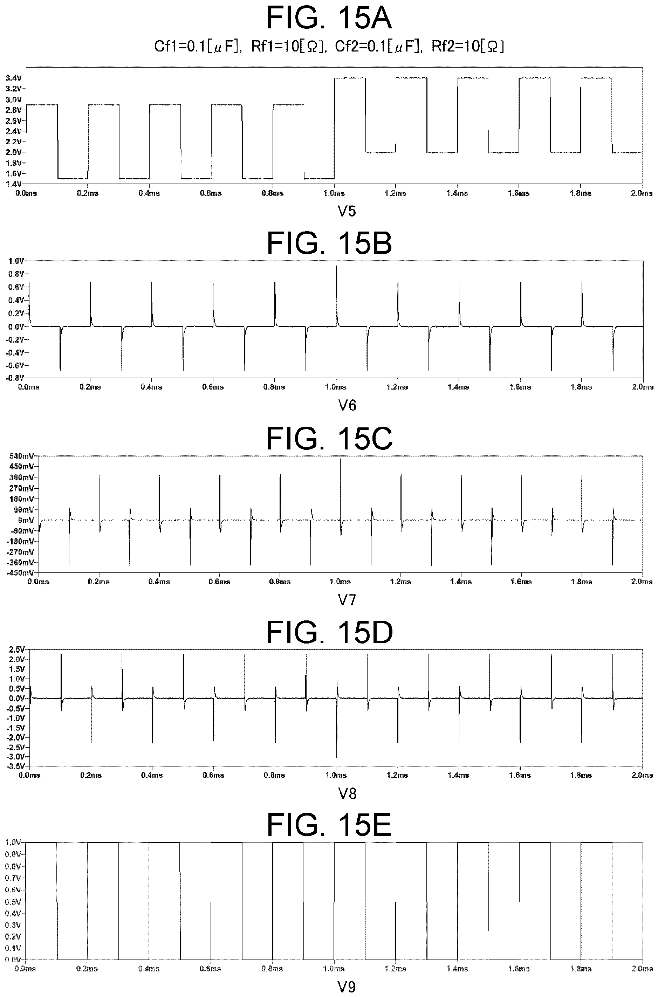

FIG. 15A to FIG. 15E(e) illustrate the simulation waveforms of the results of Simulation 2. FIG. 15A illustrates the waveform of the input signal (V5) to first ID detection circuit 19, FIG. 15B illustrates the waveform of the output signal (V6) of first differentiating circuit 191d, FIG. 15C illustrates the waveform of the output signal (V7) of second differentiating circuit 191e, FIG. 15D illustrates the waveform of the output signal (V8) of inverting amplifier circuit 191f, and FIG. 15E illustrates the waveform of the output signal (V9) of T flip-flop circuit 192.

In the present embodiment, 9600 bps is assumed as the ID communication speed. In Simulation 2, too, the input signal (V5) is a square wave with a clock frequency of 5 kHz (period of 0.2 ms) that is at or close to the clock frequency at which 9600 bits are transferred per second.

Simulation 2 also shows an example in which an offset is added to the current flowing in the power line from 1.0 ms, and the input signal (V5) increases by the amount of the offset. The amplitudes of the output signal (V6) of first differentiating circuit 191d and the output signal (V7) of second differential 191e, and the output signal (V8) of inverting amplifier circuit 191f at 1.0 ms are large. However, it does not affect the waveform of the output signal (V9) of T flip-flop circuit 192. In such a manner, by inputting, to T flip-flop circuit 192, a second-order differential waveform that takes the edge timing into account, it is possible to restore a similar waveform of the input signal (V5) in which the offset effects (that is, the effects of current variations during communication) have been canceled.

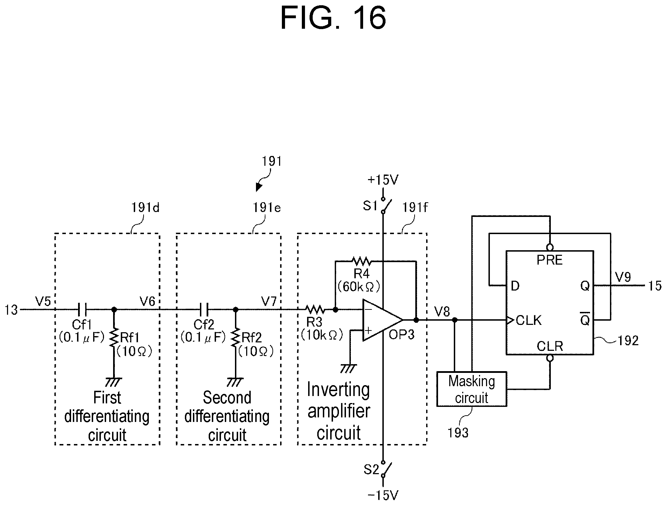

FIG. 16 illustrates a developmental example of Configuration Example 2 of first ID detection circuit 19 illustrated in FIG. 14.

First ID detection circuit 19 illustrated in FIG. 16 includes masking circuit 193 in addition to the configuration of first ID detection circuit 19 illustrated in FIG. 14. T flip-flop circuit 192 illustrated in FIG. 14 includes preset terminal PRE and clear terminal CLR. The operation of masking circuit 193 and the operation and effect of the addition of masking circuit 193 are the same as those in Configuration Example 1.

The example, in which the ID superimposed on the current flowing in the power line is detected by hardware processing performed by first ID detection circuit 19, has been described above. In this regard, detection can also be performed by software processing by first controller 15 (microcontroller). In this case, first ID detection circuit 19 is omitted, and the input signal (V1, V5) corresponding to the current measured by first current sensor 13 is directly input to the analog input port of first controller 15 (microcontroller).

The A/D converter in first controller 15 (microcontroller) converts the input signals (V1 and V5) to digital values at a sampling rate faster than the clock frequency corresponding to the communication speed of the ID (for example, a sampling rate of approximately 100 times the clock frequency). High-speed sampling is required for detailed observation of waveform transitions within a unit cycle of the input signal. The CPU in first controller 15 (microcontroller) differentiates the digital input signals (V1, V5) on which high-speed sampling has been performed, and detects the edges of the input signals (V1, V5). The CPU inverts the logic of the output signals defined by binary signals, each time an edge of the input signals (V1 and V5) is detected. The CPU detects each bit of the ID by comparing the generated output signal with a threshold value for bit determination.

The ID detection process by software processing is effective when the communication speed of the ID is low.

On the other hand, when the communication speed of the ID is high, it is necessary to use high-performance first controller 15 (microcontroller). In addition, measures against heat generation are required. It is easier to change the time constant in the ID detection process by software processing than in the ID detection process by hardware processing. In addition, since there is no need to amplify the second-order differential signal, noise due to signal amplification is not mixed in. In a CR circuit, the slope of the return of the amplitude at the edge detection is gentle, so that amplification is necessary when performing second-order differentiation.

As described above, in the present embodiment, by generating a signal whose output is inverted each time an edge of the input signal is detected, it is possible to reproduce an input signal in which the effects of DC variations have been eliminated. Moreover, by optimally setting the time constant of the high-pulse filter, the effects of short-term current variations that are slower than the waveform change speed at the time of logic inversion of the input signal can be eliminated. Moreover, the use of a flip-flop circuit allows input signal variations to be masked during periods other than the edge detection period. This prevents incorrect inversion of the output signal due to noise during this period. In contrast, when a Schmitt trigger circuit is used, the input signal variations during the periods other than the edge detection period cannot be masked, so that the probability of incorrect determination due to noise is higher than when a flip-flop circuit is used. In such a manner, in the present embodiment, it is possible to reduce incorrect determination when detecting ID from current signals.

The ID detection method according to the present embodiment can be realized with a simple circuit or simple software, which is highly advantageous in actual use. In addition, the ID detection method according to the present embodiment is highly versatile and has a wide range of applications.

The present disclosure has been described based on the embodiment. The embodiment is an example, and a person skilled in the art would easily understand that various modified examples combining the structural elements or processing in the embodiment can be made and that such modified examples are also in the scope of the present disclosure.

In the embodiment described above, the example has been described which authenticates that battery pack 10 mounted on the mounting slot of vehicle 20 and battery pack 10 of the communication partner of vehicle 20 are identical. In this regard, the ID detection method according to the embodiment described above can also be used to authenticate that battery pack 10 mounted on the mounting slot of a charger and battery pack 10 of the communication partner of the charger are identical. In this case, the charger may serve as an identification information transmitting device and battery pack 10 may serve as an identification information receiving device, or battery pack 10 may serve as an identification information transmitting device and the charger may serve as an identification information receiving device.

In the embodiment described above, the example has been described in which battery pack 10 that includes storage battery 11 is used. In this regard, a capacitor pack that includes capacitors, including electric double layer capacitor cells, lithium ion capacitor cells, etc., may be used. In the following description, battery packs and capacitor packs are collectively referred to as power storage packs.

While the present disclosure is suitable for vehicle 20 that does not include its own power supply, the present disclosure does not exclude application to vehicle 20 that includes its own power supply. Therefore, vehicles 20 are not limited to electrically assisted bicycles, but also include electric motorcycles (electric scooters), electric kick scooters, electric vehicles (including low-speed electric vehicles such as golf carts and land cars), and rail vehicles. The objects to which the power storage packs are mounted are not limited to vehicle 20, but include, for example, electric moving bodies such as electric vessels and multicopters (drones).

The embodiment may be specified by the following items.

[Item 1] An identification information receiving device (10) that receives identification information defined by a plurality of bits, the identification information being superimposed on a current or a voltage of a power line by an identification information transmitting device (20) that is connected to the identification information receiving device (10) via the power line, the identification information receiving device (10) includes: an edge detector (191) that detects an edge of an input signal that indicates a voltage value corresponding to the current or the voltage of the power line; and a T flip-flop circuit (192) that inverts an output, each time the edge of the input signal is detected.

With this, it is possible to receive identification information in which the effects of current variations or voltage variations during communication have been reduced.

[Item 2] The identification information receiving device (10) according to item 1, wherein, when an output signal of the T flip-flop circuit (192) is at a low level after an edge detection period, a high-level signal is input to a clear terminal of the T-flip flop circuit (192) and a low-level signal is input to a preset terminal of the T-flip flop circuit (192) until a next edge detection period, and when the output signal of the T flip-flop circuit (192) is at a high level after the edge detection period, a high-level signal is input to the preset terminal and a low-level signal is input to the clear terminal until the next edge detection period.

With this, it is possible to reduce incorrect determination caused due to noise.

[Item 3] The identification information receiving device (10) according to item 1, wherein the edge detector (191) includes a differentiating circuit (191a) that differentiates the input signal; a polarity inverting circuit (191b) that inverts a polarity of an output signal of the differentiating circuit (191a); and a diode OR circuit (191c) that conducts positive components of the output signal of the differentiating circuit and an output signal of the polarity inverting circuit, and outputs the positive components to a clock terminal of the T flip-flop circuit (192).

With this, it is possible to generate differential waveforms of input signals with unified polarity.

[Item 4] The identification information receiving device (10) according to item 3, wherein the differentiating circuit (191a) includes a CR circuit (Cf, Rf) and a voltage follower (OP1).

With this, it is possible to form a high-pass filter with high accuracy at low cost.

[Item 5] The identification information receiving device (10) according to item 1, wherein the edge detector (191) includes: a first differentiating circuit (191d) that differentiates the input signal; and a second differentiating circuit (191e) that differentiates an output signal of the first differentiating circuit (191d).

It is possible to generate an edge detection signal that defines the edge detection points of the input signal with a waveform that includes positive and negative polarities.

[Item 6] The identification information receiving device (10) according to item 5, wherein the edge detector (191) further includes: a non-inverting amplifier circuit that amplifies an output signal of the second differentiating circuit (191e) or an inverting amplifier circuit (191f) that inverts and amplifies the output signal of the second differentiating circuit (191e).

With this, it is possible to convert the amplitude of the second-order differential waveform to exceed the threshold voltage of T flip-flop circuit (192).

[Item 7] The identification information receiving device (10) according to item 1, wherein, when an authentication period that includes reception of the identification information ends, a power supply to an active element (OP1, OP2) included in the edge detector (191) is blocked.

With this, it is possible to eliminate unnecessary power consumption.

[Item 8] A removable and portable power storage pack (10) that serves as the identification information receiving device (10) according to any one of items 1 to 7.

With this, it is possible to realize a power storage pack (10) that is capable of receiving identification information in which the effects of the current variations or voltage variations during communication has been reduced.

[Item 9] An identification information receiving method executed by an identification information receiving device (10) that receives identification information defined by a plurality of bits, the identification information being superimposed on a current or a voltage of a power line by an identification information transmitting device (20) that is connected to the identification information receiving device (10) via the power line, the identification information receiving method comprising: detecting an edge of an input signal that indicates a voltage value corresponding to the current or the voltage of the power line; and inverting an output that is defined by a binary signal, each time the edge of the input signal is detected.

With this, it is possible to receive identification information in which the effects of the current variations or voltage variations during communication have been reduced.

[Item 10] An identification information receiving program executed by an identification information receiving device (10) that receives identification information defined by a plurality of bits, the identification information being superimposed on a current or a voltage of a power line by an identification information transmitting device (20) that is connected to the identification information receiving device (10) via the power line, the identification information receiving program causing a computer to execute: detecting an edge of an input signal that indicates a voltage value corresponding to the current or the voltage of the power line; and inverting an output that is defined by a binary signal, each time the edge of the input signal is detected.

### REFERENCE MARKS IN THE DRAWINGS

- 10: battery pack

- 20: vehicle
- 11: storage battery
- 12: first relay
- 13: first current sensor
- 14: first power supply circuit
- 15: first controller
- 16: first wireless communicator
- 17: first antenna
- 18: first ID superimposing circuit
- 19: first ID detection circuit
- 21: motor
- 22: inverter
- 23: second relay
- 24: second power supply circuit
- 25: second controller
- 26: second wireless communicator
- 27: second antenna
- 28: second ID superimposing circuit
- 29: second ID detection circuit
- 210: voltage detection circuit
- T1: power supply terminal
- T2: power receiving terminal
- Lp: power line
- 191: edge detector
- 191a: differentiating circuit
- 191b: polarity inverting circuit
- 191c: diode OR circuit
- 191d: first differentiating circuit
- 191e: second differentiating circuit
- 191f: inverting amplifier circuit
- 192: T flip-flop circuit
- 193: masking circuit
- Rf-Rf2: filter resistor
- R1-R4: resistor
- Cf-Cf2: filter capacitor
- OP1-OP3: third operational amplifier
- D1-D2: diode
- S1-S2: switch

## Claims

1. An identification information receiving device that receives identification information defined by a plurality of bits, the identification information being superimposed on a current or a voltage of a power line by an identification information transmitting device that is connected to the identification information receiving device via the power line, the identification information receiving device comprising:
an edge detector that detects an edge of an input signal that indicates a voltage value corresponding to the current or the voltage of the power line; and
a T flip-flop circuit that inverts an output of the T flip-flop circuit, each time the edge of the input signal is detected.

2. The identification information receiving device according to claim 1,
wherein, when an output signal of the T flip-flop circuit is at a low level after an edge detection period, a high-level signal is input to a clear terminal of the T flip-flop circuit and a low-level signal is input to a preset terminal of the T flip-flop circuit until a next edge detection period, and
when the output signal of the T flip-flop circuit is at a high level after the edge detection period, a high-level signal is input to the preset terminal and a low-level signal is input to the clear terminal until the next edge detection period.

3. The identification information receiving device according to claim 1,
wherein the edge detector includes:
a differentiating circuit that differentiates the input signal;
a polarity inverting circuit that inverts a polarity of an output signal of the differentiating circuit; and
a diode OR circuit that conducts positive components of the output signal of the differentiating circuit and an output signal of the polarity inverting circuit, and outputs the positive components to a clock terminal of the T flip-flop circuit.

4. The identification information receiving device according to claim 3,
wherein the differentiating circuit includes a CR circuit and a voltage follower.

5. The identification information receiving device according to claim 1,
wherein the edge detector includes:
a first differentiating circuit that differentiates the input signal; and
a second differentiating circuit that differentiates an output signal of the first differentiating circuit.

6. The identification information receiving device according to claim 5,
wherein the edge detector further includes:
a non-inverting amplifier circuit that amplifies an output signal of the second differentiating circuit or an inverting amplifier circuit that inverts and amplifies the output signal of the second differentiating circuit.

7. The identification information receiving device according to claim 1,
wherein, when an authentication period that includes reception of the identification information ends, a power supply to an active element included in the edge detector is blocked.

8. A removable and portable power storage pack that serves as the identification information receiving device according to any one of claims 1 to 7.

9. An identification information receiving method executed by an identification information receiving device that receives identification information defined by a plurality of bits, the identification information being superimposed on a current or a voltage of a power line by an identification information transmitting device that is connected to the identification information receiving device via the power line, the identification information receiving method comprising:
detecting an edge of an input signal that indicates a voltage value corresponding to the current or the voltage of the power line; and
inverting an output that is defined by a binary signal, each time the edge of the input signal is detected.

10. An identification information receiving program executed by an identification information receiving device that receives identification information defined by a plurality of bits, the identification information being superimposed on a current or a voltage of a power line by an identification information transmitting device that is connected to the identification information receiving device via the power line, the identification information receiving program causing a computer to execute:
detecting an edge of an input signal that indicates a voltage value corresponding to the current or the voltage of the power line; and
inverting an output that is defined by a binary signal, each time the edge of the input signal is detected.

11. A non-transitory recording medium on which an identification information receiving program is written, the identification information receiving program being executed by an identification information receiving device that receives identification information defined by a plurality of bits, the identification information being superimposed on a current or a voltage of a power line by an identification information transmitting device that is connected to the identification information receiving device via the power line, the identification information receiving program causing a computer to execute:
detecting an edge of an input signal that indicates a voltage value corresponding to the current or the voltage of the power line; and
inverting an output that is defined by a binary signal, each time the edge of the input signal is detected.
